# EUROPÄISCHE PATENTANMELDUNG

(11) **EP 2 011 933 A1**
(43) Veröffentlichungstag der Anmeldung: **07.01.2009**
(21) Anmeldenummer: 08159483.0
(22) Anmeldetag: 02.07.2008
(51) Int. Cl.: E04F 19/04, A62B 3/00, H02G 3/04, F21V 33/00

(54) **Sockelleiste**

(30) Priorität: 03.07.2007 CH 10732007
(71) Anmelder: Schmukle, Attila, 8832 Wollerau (CH)
(72) Erfinder: Schmukle, Attila, 8832 Wollerau (CH)
(74) Vertreter: Liebetanz, Michael

(57) **Zusammenfassung**

Eine Sockelleiste (S) umfasst ein erstes Sockelleistenelement (1) und ein zweites Sockelleistenelement (2). Die Sockelleistenelemente (1, 2) erstrecken sich in longitudinale Richtung (L), wobei das erste Sockelleistenelement (1) mit dem zweiten Sockelleistenelement (2) verbindbar ist. Das erste Sockelleistenelement (1) ist härter als das zweite Sockelleistenelement (2). Die Sockelleistenelemente (1, 2) sind im wesentlichen übereinander angeordnet und Teile des zweiten Sockelleistenelementes (2) begrenzen einen Kanal (3) zur Aufnahme von Kabeln (K) oder Drähten (D).

## Beschreibung

### Technisches Gebiet der Erfindung

Die vorliegende Erfindung betrifft eine Sockelleiste gemäss den Merkmalen des Oberbegriffs des Anspruchs 1.

### Stand der Technik

Aus dem Stand der Technik sind Sockelleisten bzw. Deckenleisten bekannt. Sockelleisten oder Deckenleisten können auch als Fussleisten oder Fussbodenleisten bezeichnet werden. Solche Sockelleisten werden verwendet, um die Fugen beim Übergang zwischen Wand und Fussboden bzw. Wand und Decke abzudecken. Dadurch wird die Wand vor Stössen und Verschmutzung in diesem Bereich geschützt. Solche Stösse können beispielsweise durch einen Staubsauger verursacht werden. Ferner wird der Übergang optisch ansprechender gestaltet.

Sockelleisten aus dem Stand der Technik sind meist aus Holz oder Kunststoff und sind dadurch üblicherweise relativ steif ausgestaltet. Bei unebenen Fussböden tritt dabei das Problem auf, dass sich zwischen der Sockelleiste und dem Boden ein Spalt bilden kann. Dies führt dazu, dass sich Staub und anderer Schmutz in diesem Bereich ansammeln kann.

Die in DE 84 15 754 offenbarte Sockelleiste löst dieses Problem. Ein Trägerstreifen ist zwischen der Sockelleiste und der Wand angeordnet. Im Bereich des Bodens ist die Sockelleiste mit einer federnden Lippe ausgestaltet, welche von der Wand weggebogen ausgestattet ist. Aufgrund der federnden Eigenschaften kann ein dichter Abschluss mit dem Bodenbelag erzielt werden.

Eine solche Konstruktion hat jedoch den Nachteil, dass sich der Kleber bei Temperatur-und/oder Feuchtigkeitsschwankungen lösen kann. Ferner ist diese Sockelleiste aufgrund ihrer Eigenschaften auf die Funktion des Abdeckens des Überganges von Wand und Boden bzw. Decke beschränkt.

Aus der US 5,598,681 ist eine Sockelleiste bekannt, welche einen in Längsrichtung verlaufenden Kanal umfasst. Der Kanal wird mit einem Deckel verschlossen und dient der Aufnahme von Kabeln. Ferner weist der Deckel Lippen auf, welche am oberen bzw. am unteren Ende des Deckels angeordnet sind. Die im unteren Bereich angeordnete Lippe dient ebenfalls dem Ausgleich von Unebenheiten des Bodens.

Nachteilig ist der komplizierte Aufbau der Sockelleiste. Zudem resultieren durch die vielen Öffnungen relativ dünne Wandstärken, was die Stabilität der Sockelleiste gegenüber den beschriebenen Stössen schwächt. Ferner ist der obere Übergang zwischen Deckel und Sockelleiste nachteilig ausgestaltet, so dass sich in diesem Bereich Staub und Schmutz ansammeln kann.

Ein weiterer Nachteil von Sockelleisten aus dem Stand der Technik ist die Tatsache, dass diese nicht vielseitig einsetzbar sind. Zudem kann sich Schmutz und Staub, welcher sich im Bereich beim Übergang zwischen Wand und Boden ansammelt, nicht entfernt werden. Die Reinigung dieses Bereiches ist nicht möglich. Dies ist beispielsweise für Asthmatiker ein Problem.

### Darstellung der Erfindung

Ausgehend von diesem Stand der Technik liegt der Erfindung eine Aufgabe zugrunde, eine Sockelleiste anzugeben, welche die Nachteile des Standes der Technik überwindet. Ferner soll eine Sockelleiste angegeben werden, welche möglichst vielseitig einsetzbar ist. Zudem sollen Teile der Sockelleiste in einfacher Art und Weise austauschbar sein. Insbesondere soll eine Sockelleiste geschaffen werden, welche gegenüber Stössen besonders robust ist.

Diese Aufgabe löst eine Sockelleiste mit den Merkmalen des Patentanspruchs 1. Vorteilhafte Ausgestaltungen der Erfindung sind in den abhängigen Ansprüchen angegeben.

Demgemäss umfasst eine Sockelleiste ein erstes Sockelleistenelement und ein zweites Sockelleistenelement. Die Sockelleistenelemente erstrecken sich in longitudinale Richtung, wobei das erste Sockelleistenelement mit dem zweiten Sockelleistenelement verbindbar ist. Das erste Sockelleistenelement ist härter als das zweite Sockelleistenelement. Die Sockelleistenelemente sind im wesentlichen übereinander angeordnet und Teile des zweiten Sockelleistenelementes begrenzen einen Kanal zur Aufnahme von Kabeln oder Drähten.

Eine solche Sockelleiste ist besonders flexibel einsetzbar, da sie die Nachteile des Standes der Technik überwindet. Ferner eignet sich der Kanal besonders gut zur Aufnahme von Kabeln und Drähten. Zudem kann der Benutzer das zweite Sockelleistenelement austauschen und mit einem anderen zweiten Sockelleistenelement ersetzen, was einen modularen Einsatz erlaubt.

Vorzugsweise umfassen das erste Sockelleistenelement und das zweite Sockelleistenelement je eine Kontaktfläche, über welche Kontaktflächen sich die Sockelleistenelemente berühren.

Vorzugsweise erstrecken sich die Kontaktflächen im wesentlichen horizontal oder winklig, wobei sich die Distanz vom Boden zur Kontaktfläche mit zunehmendem Abstand von der Wand vergrössert.

Vorzugsweise umfasst das eine Sockelleistenelement eine Nut, welche sich von der Kontaktfläche in das Sockelleistenelement hinein erstreckt, und das andere Sockelleistenelement umfasst ein Verbindungselement, welches sich von der Kontaktfläche vom Sockelleistenelement erstreckt, wobei das Verbindungselement in die Nut hinein ragt, so dass das erste Sockelleistenelement mit dem zweiten Sockelleistenelement verbindbar ist.

Die Anordnung der Kontaktflächen bzw. der Verbindungselemente erlaubt eine gute und einfache Montage des zweiten Sockelleistenelementes am ersten Sockelleistenelement.

Vorzugsweise erstreckt sich das Verbindungselement über die gesamte Länge des entsprechenden Sockelleistenelementes. Alternativ kann sich das Verbindungselement abschnittsweise über das Sockelleistenelement erstrecken.

Bevorzugterweise weist das zweite Sockelleistelement eine flexible Lippe zur Ausgleichung von Unebenheiten des Bodens auf.

Eine Sockelleiste umfasst bevorzugterweise ein erstes Sockelleistenelement und ein zweites Sockelleistenelement. Die Sockelleistenelemente erstrecken sich in longitudinale Richtung, wobei das erste Sockelleistenelement mit dem zweiten Sockelleistenelement verbindbar ist. Das erste Sockelleistenelement ist härter als das zweite Sockelleistenelement. Das zweite Sockelleistenelement umfasst einen in longitudinale Richtung verlaufenden Kanal.

Der Kanal wird vorzugsweise mit einem Licht emittierenden oder Licht reflektierenden Band ausgestattet.

Weitere vorteilhafte Ausführungsformen sind in den Unteransprüchen gekennzeichnet.

### Kurze Beschreibung der Zeichnung

Die Erfindung wird im folgenden anhand der Zeichnung beispielhaft näher beschrieben. Es zeigen:
- Fig. 1 a: eine perspektivische Ansicht eines zweiten Sockelleistenelementes einer erfindungsgemässen Sockelleiste nach einem ersten Ausführungsbeispiel;
- Fig. 1b: eine Seitenansicht eines ersten Sockelleistenelementes und des zweiten Sockelleistenelementes nach Figur 1 a;
- Fig. 2a: eine perspektivische Ansicht eines zweiten Sockelleistenelementes einer erfindungsgemässen Sockelleiste nach einem zweiten Ausführungsbeispiel;
- Fig. 2b: eine Seitenansicht eines ersten Sockelleistenelementes und des zweiten Sockelleistenelementes nach Figur 2a;
- Fig. 3a: eine perspektivische Ansicht eines zweiten Sockelleistenelementes einer erfindungsgemässen Sockelleiste nach einem dritten Ausführungsbeispiel; und
- Fig. 3b: eine Seitenansicht eines ersten Sockelleistenelementes und des zweiten Sockelleistenelementes nach Figur 3a.

### Beschreibung von beispielhaften Ausführungsbeispielen

Mit Bezug zu den Zeichnungen werden mögliche Ausführungsbeispiele beschrieben. Die Zeichnungen und die Beschreibung zeigen bevorzugte Ausführungsbeispiele und sollten nicht ausgelegt werden, um die Erfindung einzuschränken, welche durch die Ansprüche definiert ist.

Nachfolgend wird der Ausdruck Sockelleiste verwendet. Unter diesem Ausdruck wird ein sich longitudinal erstreckendes Element verstanden, welches zum Abdecken des Übergangs einer Wand W zu einem Fussboden B oder einer Decke oder einer weiteren Wand dient. Typischerweise begrenzen die Wand W, der Fussboden B und die Decke einen Raum R, wie beispielsweise ein Wohnzimmer oder ein Schlafzimmer etc. Vorzugsweise wird die erfindungsgemässe Sockelleiste im Wohnbereich eingesetzt. Die beschriebenen Merkmale sind so zu verstehen, dass sie gleichermassen für den Übergang Wand W zu Fussboden B bzw. für den Übergang Wand W zu Decke bzw. für den Übergang Wand W zu einer weiteren Wand anwendbar sind. Zur besseren Lesbarkeit wird fortan der Ausdruck Boden verwendet, wobei dieser auch die Decke und die weitere Wand einschliesst.

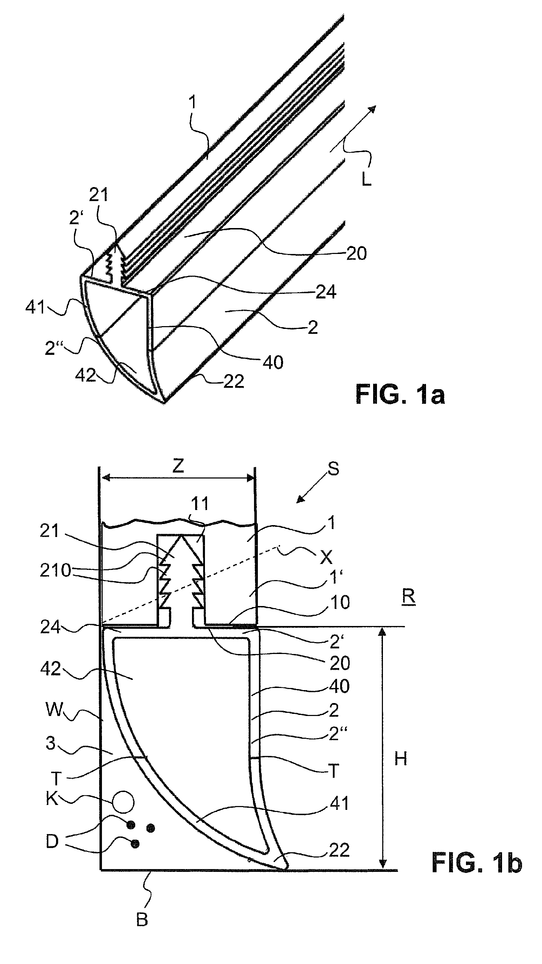

Die Figuren 1a und 1b zeigen eine erfindungsgemässe Sockelleiste S, welche ein erstes Sockelleistenelement 1 und ein zweites Sockelleistenelement 2 umfasst, gemäss einem ersten Ausführungsbeispiel. Die Sockelleiste S bzw. das erste Sockelleistenelement 1 und das zweite Sockelleistenelement 2 erstrecken sich in eine longitudinale Richtung, welche mit dem Pfeil L dargestellt ist.

Das erste Sockelleistenelement 1 ist mit dem zweiten Sockelleistenelement 2 verbindbar, wobei die Sockelleistenelemente 1, 2 im wesentlichen übereinander angeordnet sind. Dabei ist das zweite Sockelleistenelement 2 vorzugsweise derart angeordnet, dass es sich näher beim Boden B befindet. Das erste Sockelleistenelement 1 ist somit über dem zweiten Sockelleistenelement 2 angeordnet. Im vorliegenden Ausführungsbeispiel wird das erste Sockelleistenelement 1 mit der Wand W mittels Befestigungsmitteln (Schrauben etc.) befestigt.

Das erste Sockelleistenelement 1 ist im wesentlichen als ein Vollprofil ausgestaltet. Unter einem Vollprofil wird ein Profil verstanden, welches in seinem Querschnitt keine vollständig abgeschlossenen und sich longitudinal erstreckenden Öffnungen aufweist. Vorzugsweise ist das erste Sockelleistenelement 1 aus einem harten Material, wie beispielsweise Holz oder Kunststoff, insbesondere einem Duroplast. In der Figur 1b ist nur der untere Abschnitt 1' des ersten Sockelleistenelementes 1 dargestellt, der obere Bereich kann eine beliebige Querschnittsform aufweisen. Beispielsweise ist ein Querschnitt denkbar, welcher im oberen Bereich rechteckig oder abgerundet oder abgeschrägt ausgebildet ist. Das erste Sockelleistenelement 1 ist gegen das zweite Sockelleistenelement 2 hin mit einer Kontaktfläche 10 begrenzt. Wesentlich ist, dass das erste Sockelleistenelement 1 flächig auf einer Wand W befestigt wird. Das heisst mit anderen Worten, dass die Sockelleiste typischerweise auf der Wand W angeordnet ist und sich von dieser abhebt.

Das zweite Sockelleistenelement 2 weist einen zum ersten Sockelleistenelement 1 zugewandten ersten Abschnitt 2' und einen zum Boden B zugewandten zweiten Abschnitt 2" auf. Vorzugsweise ist das zweite Sockelleistenelement 2 aus einem weicheren Material als das erste Sockelleistenelement 1. Das heisst mit anderen Worten, dass das erste Sockelleistenelement 1 härter als das zweite Sockelleistenelement 2 ist. Vorzugsweise ist das zweite Sockelleistenelement aus der Gruppe der thermoplastischen Elastomere (TPE) ausgewählt. Insbesondere TPE-S (Styrol-Blockcopolymere). Vorzugsweise ist die Shore-Härte des thermoplastischen Elastomers zwischen 30 und 50 Shore A, besonders bevorzugt zwischen 35 und 45 Shore A, insbesondere etwa 40 Shore A.

Alternativ kann das zweite Sockelleistenelement auch aus zwei verschiedenen Kunststoffen ausgestaltet sein. Beispielsweise ist es denkbar, den oberen Bereich aus einem härteren Material und der untere Bereich aus einem weicheren Material auszugestalten. Das heisst mit anderen Worten, dass der erste Abschnitt 2' und daran näher gelegene Bereiche des zweiten Abschnittes 2" aus einem härteren Material sind, und dass die anderen Teile des zweiten Abschnittes 2" aus einem weicheren Material sind. Dies wird durch die Trennlinie T dargestellt. Beispielsweise ist es denkbar, den härteren Teil aus einem Thermoplast, insbesondere aus Acrylnitril-Butadien-Styrol-Copolymerisat (ABS), und den weicheren Teil aus einem oben genannten thermoplastischen Elastomer auszugestalten. Die härteren Bereiche sind weicher als das erste Sockelleistenelement. Durch diese Materialwahl wird eine im oberen Bereich des zweiten Sockelleistenelementes eine mechanische stabilere Ausgestaltung erzielt, welche gegenüber mechanischen Belastungen robust ist, und im unteren Bereich des zweiten Sockelleistenelementes wird ein flexible Ausgestaltung erzielt, so dass Unebenheiten des Bodens ausgeglichen werden können.

Der erste Abschnitt 2' des zweiten Sockelleistenelementes 2 dient im wesentlichen der Verbindung mit dem ersten Sockelleistenelement 1. Der erste Abschnitt 2' weist ein Stegelement 24 und ein daran angeformtes Verbindungselement 21 auf. Die Oberfläche, von welcher sich das Verbindungselement 21 erstreckt und welche dem ersten Sockelleistenelement 1 zugewandt ist, kann als Kontaktfläche 20 bezeichnet werden.

Die beiden Sockelleistenelemente 1, 2 kontaktieren sich demnach über entsprechende Kontaktflächen 10, 20. Das heisst, dass das erste Sockelleistenelement 1 mit der Kontaktfläche 10 auf der Kontaktfläche 20 des Stegelementes 24 zweiten Sockelleistenelementes 2 aufliegt. Die beiden Kontaktflächen 10, 20 sind daher parallel zueinander ausgestaltet. Vorzugsweise erstrecken sich die Kontaktflächen 10, 20 im wesentlichen horizontal, das heisst parallel zum Boden B oder senkrecht zur Wand W. Alternativ können die Kontaktflächen 10, 20 auch winklig angeordnet sein. Hierfür ist in der Figur 1b eine entsprechende gestrichelte Linie X eingezeichnet. Vorzugsweise liegt der Winkel derart, dass sich die Distanz vom Boden B zu den Teilbereichen der Kontaktflächen 10, 20 mit zunehmendem Abstand von der Wand W vergrössert.

Im vorliegenden Ausführungsbeispiel weist das erste Sockelleistenelement 1 eine sich von der Kontaktfläche 10 in das erste Sockelleistenelement 1 erstreckende Nut 11 auf. Die Nut 11 erstreckt sich vorzugsweise senkrecht von der Kontaktfläche 10. Das zweite Sockelleistenelement 2 weist das sich von der Kontaktfläche 20 erstreckende Verbindungselement 21 auf. Das Verbindungselement 21 weist im vorliegenden Ausführungsbeispiel mehrere keilförmige Elemente 210 auf, welche auf beiden Seiten des Verbindungselementes 21 angeordnet sind. Im eingeführten Zustand ragt das Verbindungselement 21 in die Nut 11 ein. Die beiden Sockelleistenelemente 1, 2 können daher in einfacher Art und Weise und ohne Werkzeug miteinander verbunden werden. Mittels den keilförmigen Elementen 210 wird das zweite Sockelleistenelement 2 in der Nut 11 des ersten Sockelleistenelements 1 kraftschlüssig gehalten. Es kann auch von einer mechanischen Verbindung gesprochen werden. Das Verbindungselement 21 kann sich über die ganze Länge des zweiten Sockelleistenelementes 2 erstrecken oder abschnittsweise unterbrochen sein. Durch die Ausgestaltung des Verbindungselementes 21 wird eine besonders gute Stützung des zweiten Sockelleistenelementes 2 im ersten Sockelleistenelement 1 erzielt.

Die Art der Verbindung ist vorteilhaft, denn der Benutzer kann das zweite Sockelleistenelement 2 vom ersten Sockelleistenelement 1 entfernen, wobei das erste Sockelleistenelement 2 vorzugsweise nicht von der Wand W demontiert werden muss. Dies wird durch die winklige Ausgestaltung der Kontaktflächen 10, 20 noch begünstigt. Dadurch wird eine flexible modul-artige Sockelleiste bereitgestellt.

Der zweite Abschnitt 2" des zweiten Sockelleistenelementes 2 ist derart ausgestaltet, dass Teile des zweiten Sockelleistenelementes 2 einen Kanal 3 zur Aufnahme von Kabeln K oder Drähten D begrenzen. Der Kanal 3 wird durch Teile des zweiten Sockelleistenelementes 2, des Bodens B und der Wand W begrenzt und erstreckt sich ebenfalls longitudinal. Das heisst, dass der Kanal 3 durch die Wand W, auf welcher die Sockelleiste befestigt ist, den Kanal 3 begrenzt. Der Kanal erstreckt sich in longitudinaler Richtung entlang der Sockelleiste S bzw. der Wand W. Der Benutzer der erfindungsgemässen Sockelleiste S hat also die Möglichkeit, Kabel K in einer Wohnung in einfacher Art und Weise hinter der Sockelleiste S, hier hinter dem zweiten Sockelleistenelement 2 anzuordnen. Dabei sind die Kabel K im Kanal 3, welcher auch als Kabelkanal bezeichnet werden kann, gut platziert und von aussen nicht einsehbar.

Der zweite Abschnitt 2" des zweiten Sockelleistenelementes 2 ist dem Stegelement 24 angeformt und kann erfindungsgemäss verschiedenartig ausgestaltet werden. Im vorliegenden ersten Ausführungsbeispiel umfasst der zweite Abschnitt 2" einen vorderen Steg 40 und einen hinteren Steg 41. Der vordere Steg 40 und der hintere Steg 41 erstrecken sich einerseits vom Stegelement 24 in Richtung Boden B weg und andererseits entlang der longitudinalen Richtung L. Der hintere Steg 41 ist am Stegelement 24 in dem Bereich angeformt, welcher zur Wand W hin gerichtet ist. Der vordere Steg 40 ist am gegenüberliegenden Ende des Stegelementes 24 an demselben angeformt.

Der vordere Steg 40 erstreckt sich in einem ersten Abschnitt vom Stegelement 24 im wesentlichen senkrecht weg. In einem zweiten Abschnitt ist der vordere Steg 40 gekrümmt ausgebildet, wobei sich die Krümmung von der Wand W weg erstreckt.

Der hintere Steg 41 erstreckt sich vom Stegelement 24 in einer gekrümmten Form. Die Krümmung ist dabei derart, dass der hintere Steg 41 im Bereich der Krümmung des vorderen Steges 40 auf denselben trifft. Dabei wird eine Art Dichtlippe oder flexible Lippe 22 gebildet. Der vordere Steg 40 und der hintere Steg 41 bilden einen Hohlraum 42, welcher sich ebenfalls entlang der Richtung L longitudinal durch das zweite Sockelleistenelement 2 erstreckt.

Wie oben schon beschrieben kann das zweite Sockelleistenelement 2 aus einem härteren und einem weicheren Kunststoff ausgebildet sein. Die Teile des zweiten Sockelleistenelementes oberhalb der Trennlinie T sind aus dem härteren Kunststoff ausgebildet und die Teile unterhalb der Trennlinie T, also die dem Boden B zugewandten, sind aus dem weicheren Kunststoff ausgebildet. Durch den härteren Kunststoff kann eine gute Stützung des zweiten Sockelleistenelementes 2 im ersten Sockelleistenelement 1 erzielt werden.

Die Dichtlippe 22 berührt den Boden B auf einem sehr kleinen, schmalen, linienförmigen Bereich. Dadurch wird sichergestellt, dass eine optimale Dichtwirkung erzielt wird. Die Dichtwirkung wird durch den weicheren Kunststoff noch verbessert.

Im vorliegenden ersten Ausführungsbeispiel wird der Kanal 3 demnach durch den Boden B, die Wand W und den hinteren Steg 41 begrenzt.

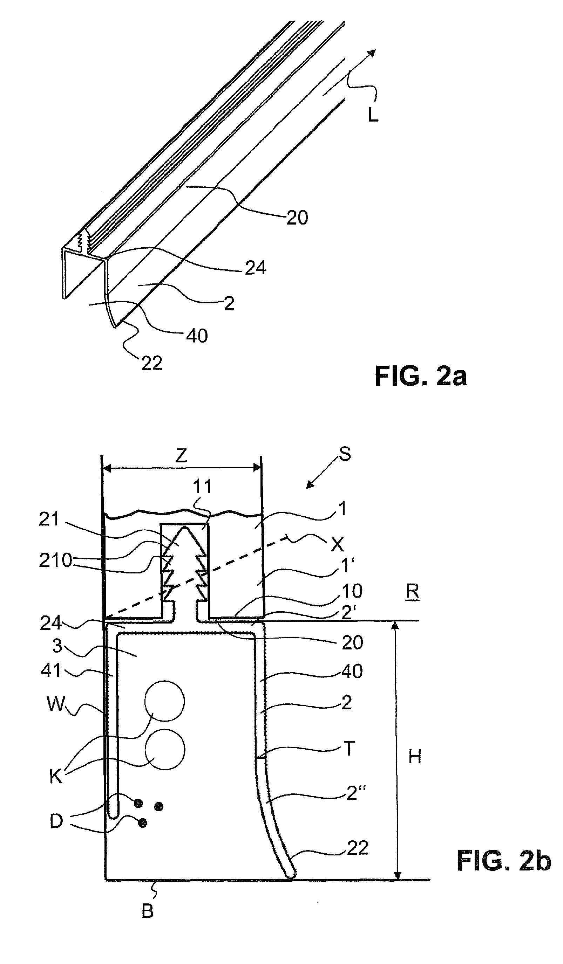

Die Figuren 2a und 2b zeigen eine erfindungsgemässe Sockelleiste S, welche ein erstes Sockelleistenelement 1 und ein zweites Sockelleistenelement 2 umfasst, gemäss einem zweiten Ausführungsbeispiel. Gleiche Teile sind mit gleichen Bezugszeichen versehen. Ebenfalls lassen sich Teilmerkmale aller Ausführungsbeispiele miteinander zu neuen Ausführungsbeispielen beliebig kombinieren.

Der erste Abschnitt 2' des zweiten Sockelleistenelementes dieses zweiten Ausführungsbeispiel ist im wesentlichen identisch zum ersten Abschnitt 2' des ersten Ausführungsbeispiels ausgebildet. Ebenfalls ist das erste Sockelleistenelement 1 identisch ausgestaltet. Der Benutzer kann demnach das zweite Sockelleistenelement 2 gemäss dem ersten Ausführungsbeispiel mit dem zweiten Sockelleistenelement 2 gemäss dem zweiten Ausführungsbeispiel ersetzen, wobei das erste Sockelleistenelement 1 das gleiche bleibt. Vorzugsweise haben demnach die zweiten Sockelleistenelemente 2 aller Ausführungsbeispiele die gleiche Bauhöhe H. Besonders bevorzugt weisen auch die Stegelemente 24 aller Ausführungsbeispiele die gleiche Breite X auf. Insbesondere ist die Breite der Stegelemente 24 gleich der Breite der Sockelleiste. Dadurch kann der Benutzer die Sockelleiste besonders flexibel an seine Bedürfnisse anpassen.

Der zweite Abschnitt 2" des zweiten Sockelleistenelementes 2 ist dem Stegelement 24 angeformt. Im vorliegenden zweiten Ausführungsbeispiel umfasst der zweite Abschnitt 2" einen vorderen Steg 40, welcher sich im Querschnitt gesehen gegen den Boden B hin und entlang der longitudinalen Richtung L erstreckt. Der vordere Steg 40 ist am Stegelement 24 an dem Bereich angeformt, welcher nicht zur Wand W hin gerichtet ist. Ferner umfasst der zweite Abschnitt einen hinteren Steg 41, welcher an dem Bereich angeformt ist, welcher zur Wand W hin gerichtet ist. Der hintere Steg 41 erstreckt sich vorzugsweise senkrecht vom Stegelement 24.

Der vordere Steg 40 erstreckt sich in einem ersten Abschnitt vom Stegelement 24 im wesentlichen senkrecht weg. In einem zweiten Abschnitt ist der vordere Steg 40 gekrümmt ausgebildet. Wobei sich die Krümmung von der Wand W weg erstreckt. Der Endbereich des vorderen Steges kann auch als Dichtlippe 22 bezeichnet werden, welche den Abschluss des vorderen Steges 40 bildet.

Der hintere Steg 41 und Teile des vorderen Steges bis hin zur Trennlinie T sind ebenfalls aus dem härteren Kunststoff. Die Dichtlippe 22, welche sich nach der Trennlinie T erstreckt ist aus dem weicheren Kunststoff. Dieses Ausführungsbeispiel ist insbesondere vorteilhaft, da die Dichtlippe 22 leicht verformbar ist und sich gut den Unebenheiten des Bodens anpassen kann. Da der obere Bereich aus dem härteren Kunststoff ausgebildet ist, bietet dieser guten Widerstand gegen mechanische Einflüsse.

In diesem Ausführungsbeispiel wird der Kanal 3 durch die Wand W, den Boden B und den vorderen Steg 40 begrenzt. Dies ist vorteilhaft, denn der Kanal 3 weist einen grossen Querschnitt auf und kann somit eine Mehrzahl Kabel aufnehmen.

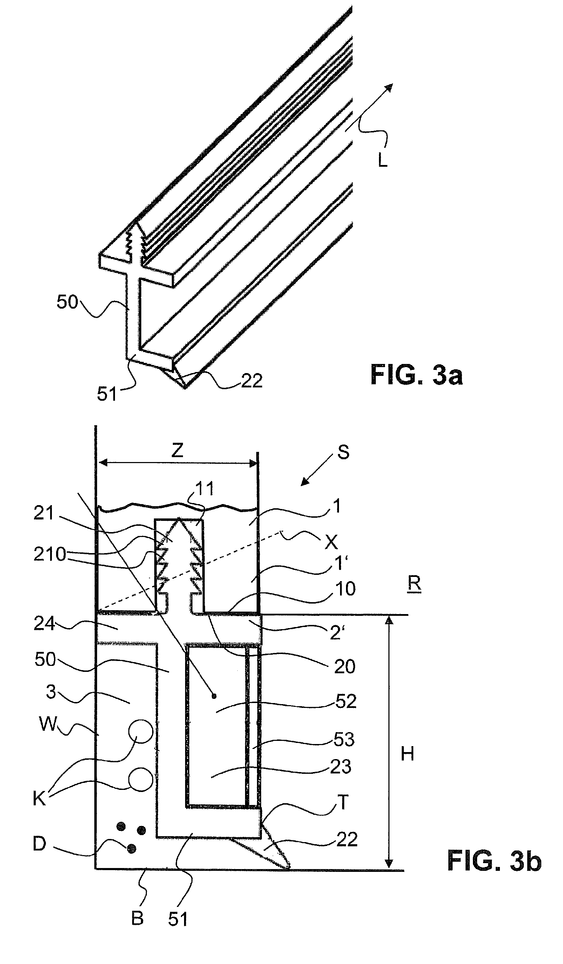

Die Figuren 3a und 3b zeigen eine erfindungsgemässe Sockelleiste S, welche ein erstes Sockelleistenelement 1 und ein zweites Sockelleistenelement 2 umfasst, gemäss einem dritten Ausführungsbeispiel. Gleiche Teile sind mit gleichen Bezugszeichen versehen.

Der erste Abschnitt 2' des zweiten Sockelleistenelementes 2 dieses dritten Ausführungsbeispiel ist im wesentlichen identisch zum ersten Abschnitt 2' des ersten und des zweiten Ausführungsbeispiels ausgebildet. Auch hier ist das erste Sockelleistenelement gemäss den oben beschriebenen Ausführungsbeispielen ausgestaltet. Der Benutzer kann demnach auch hier das zweite Sockelleistenelement 2 gemäss dem ersten bzw. zweiten Ausführungsbeispiel mit dem zweiten Sockelleistenelement 2 gemäss dem dritten Ausführungsbeispiel ersetzen, wobei das erste Sockelleistenelement 1 im wesentlichen das gleiche bleibt.

Der zweite Abschnitt 2" des zweiten Sockelleistenelementes 2 ist dem Stegelement 24 angeformt und erstreckt sich gegen den Boden B hin von diesem weg. Im vorliegenden dritten Ausführungsbeispiel umfasst der zweite Abschnitt einen Kanal 23, welcher sich entlang der longitudinalen Richtung L erstreckt. Der Kanal 23 ist dabei derart ausgerichtet, dass dieser dem Raum R hin und nicht der Wand W hin zugewandt ist.

Der Kanal 23 wird im wesentlichen durch das Stegelement 24, einen ersten Schenkel 50 und einen zweiten Schenkel 51 gebildet. Der erste Schenkel 50 ist dem Stegelement 24 angeformt und steht hier senkrecht von diesem ab. Vorzugsweise ist der erste Schenkel 50 etwa gegenüber dem Verbindungselement 21 angeordnet. Das heisst mit anderen Worten, dass der erste Schenkel 50 etwa mittig am Stegelement 24 angeordnet ist. Im unteren Bereich ist dem ersten Schenkel 50 ein zweiter Schenkel 51 angeformt, welcher sich vorzugsweise senkrecht vom ersten Schenkel 50 erstreckt. Der zweite Schenkel 51 weist dabei eine Länge auf, dass der Kanal 23 einen rechteckigen Querschnitt aufweist. Vorzugsweise sind die Teile, welche den Kanal 23 bilden aus dem härteren Kunststoff.

Im Kanal 23 kann ein Licht emittierendes oder ein Licht reflektierendes Band 52 eingelassen werden. Dadurch wird ein aktiver oder ein passiver Lichtstreifen im zweiten Sockelleistenelement 2 bereitgestellt. Dies ist beispielsweise vorteilhaft, um Personen den Weg zu einem Notausgang zu zeigen oder eine ansprechende Beleuchtung eines Raumes R bereitzustellen.

Ein Licht emittierendes Band 52 kann beispielsweise mit Leuchtdioden ausgestattet sein. Alternativ kann es sich auch um eine Elektrolumineszenz-Folie handeln. Solche Bänder 52 sind dem Fachmann bekannt. Beispielsweise sind Licht emittierende Bänder 52 mit einem Querschnitt von 4 mm x 11 mm bekannt. Vorzugsweise wird das Licht emittierende Band 52 mit einer Schutzfolie 53 bedeckt. Das Band 52 als auch die Schutzfolie 53 können in den Kanal 23 eingeklebt werden. Zudem können im Kanal 23 zwischen dem Band 52 bzw. der Schutzfolie 53 und dem ersten Schenkel 50 auch Kabel oder Drähte angeordnet werden.

Ferner ist am zweiten Schenkel 51 eine separate Dichtlippe 22 angeformt, welche die Abdichtung des Kanals 3 zum Raum R hin bereitstellt. Die Dichtlippe ist vorzugsweise aus dem weicheren Kunststoff.

Aufgrund der Anordnung des ersten Steges 50 weist auch dieses Ausführungsbeispiel einen Kanal 3 auf. Der Kanal 3 ist in diesem Ausführungsbeispiel durch die Wand W, den Boden B, das Stegelement 24, den ersten Schenkel 50, den zweiten Schenkel 52 und die Dichtlippe 22 begrenzt. Die Sockelleiste gemäss dem dritten Ausführungsbeispiel ist äusserst flexibel einsetzbar und dient demnach als Sockelleiste, als auch als Kabelkanal bzw. Beleuchtungsstreifen.

Bei den oben beschriebenen Ausführungsbeispielen können die Farbe des ersten Sockelleistenelementes und die Farbe des zweiten Sockelleistenelementes unterschiedlich sein. Dadurch kann der Benutzer eine optisch ansprechende Kombination bereitstellen.

Das zweite Sockelleistenelement 2 gemäss der vorliegenden Erfindung wird vorzugsweise mittels einem Koextrusionsverfahren bereitgestellt. Dadurch wird der weiche und der härtere Kunststoff gut miteinander verbunden.

### Bezugszeichenliste

- 1: erstes Sockelleistenelement
- 2: zweites Sockelleistenelement
- 2': erster Abschnitt
- 2": zweiter Abschnitt
- 3: Kanal
- 10: Kontaktfläche
- 11: Nut
- 20: Kontaktfläche
- 21: Verbindungselement
- 22: flexible Lippe
- 23: Kanal
- 24: Stegelement
- 40: vorderer Steg
- 41: hinterer Steg
- 50: erster Schenkel
- 51: zweiter Schenkel
- 52: Licht emittierendes / Licht reflektierendes Band
- 53: Schutzfolie
- 210: keilförmige Elemente
- S: Sockelleiste
- K: Kabel
- D: Draht
- B: Fussboden, Decke
- W: Wand
- R: Raum
- H: Höhe
- Z: Breite

## Patentansprüche

1. Sockelleiste (S) umfassend ein erstes Sockelleistenelement (1) und ein zweites Sockelleistenelement (2), wobei sich die Sockelleistenelemente (1, 2) in longitudinale Richtung (L) erstrecken, wobei das erste Sockelleistenelement (1) mit dem zweiten Sockelleistenelement (2) verbindbar ist und wobei das erste Sockelleistenelement (1) härter als das zweite Sockelleistenelement (2) ist, **dadurch gekennzeichnet, dass** die Sockelleistenelemente (1, 2) im wesentlichen übereinander angeordnet sind und dass Teile des zweiten Sockelleistenelementes (2) einen Kanal (3) zur Aufnahme von Kabeln (K) oder Drähten (D) begrenzen.

2. Sockelleiste nach Anspruch 1, **dadurch gekennzeichnet, dass** das erste Sockelleistenelement (1) und das zweite Sockelleistenelement (2) je eine Kontaktfläche (10, 20) umfassen, über welche Kontaktflächen (10, 20) sich die Sockelleistenelemente (1, 2) berühren.

3. Sockelleiste nach einem der vorhergehenden Ansprüche, **dadurch gekennzeichnet, dass** sich die Kontaktflächen (10, 20) im wesentlichen horizontal oder winklig erstrecken, wobei sich die Distanz vom Boden (B) zur Kontaktfläche mit zunehmendem Abstand von der Wand (W) vergrössert.

4. Sockelleiste nach einem der vorhergehenden Ansprüche, **dadurch gekennzeichnet, dass** das eine Sockelleistenelement (1) eine Nut (11) umfasst, welche sich von der Kontaktfläche (10) in das Sockelleistenelement (1) hinein erstreckt, und dass das andere Sockelleistenelement (2) ein Verbindungselement (21) umfasst, welches sich von der Kontaktfläche vom Sockelleistenelement (2) erstreckt, wobei das Verbindungselement (21) in die Nut (11) hinein ragt, so dass das erste Sockelleistenelement (1) mit dem zweiten Sockelleistenelement (2) verbindbar ist.

5. Sockelleiste nach einem der vorhergehenden Ansprüche, **dadurch gekennzeichnet, dass** sich das Verbindungselement (21) über die gesamte Länge des entsprechenden Sockelleistenelementes (2) erstreckt, oder dass sich das Verbindungselement (21) abschnittsweise über das Sockelleistenelement (2) erstreckt.

6. Sockelleiste nach einem der vorhergehenden Ansprüche, **dadurch gekennzeichnet, dass** das zweite Sockelleistelement (2) eine flexible Lippe (22) zur Ausgleichung von Unebenheiten des Bodens (B) aufweist.

7. Sockelleiste nach dem Oberbegriff des Anspruchs 1 oder nach einem der vorhergehenden Ansprüche, **dadurch gekennzeichnet, dass** das zweite Sockelleistenelement (2) einen in longitudinale Richtung verlaufenden Kanal (23) umfasst.

8. Sockelleiste nach Anspruch 7, **dadurch gekennzeichnet, dass** ein Licht emittierendes oder Licht reflektierendes Band im Kanal (23) eingelassen ist.

9. Sockelleistenelement (1) zur Verbindung mit einem weiteren Sockelleistenelement (2), wobei sich das Sockelleistenelement (1) in longitudinale Richtung erstreckt, **dadurch gekennzeichnet, dass** das Sockelleistenelement (1, 2) ferner eine sich in diese longitudinale Richtung erstreckende Kontaktfläche (10, 20) umfasst, wobei sich eine Nut (11) von dieser Kontaktfläche (10) in das Sockelleistenelement (1) hinein erstreckt oder wobei sich ein Verbindungselement (21) von dieser Kontaktfläche (20) vom Sockelleistenelement (2) erstreckt, so dass sich zwei Sockelleistenelemente (1, 2) über das Verbindungselement (21) bzw. die Nut (11) miteinander verbinden lassen.

10. Sockelleistenelement (2) nach Anspruch 9, **dadurch gekennzeichnet, dass** sich das Verbindungselement (21) über die gesamte Länge des entsprechenden Sockelleistenelementes (2) erstreckt, oder dass sich das Verbindungselement (21) abschnittsweise über das Sockelleistenelement (2) erstreckt.

11. Sockelleistenelement (2) nach einem der Ansprüche 9 bis 10, **dadurch gekennzeichnet, dass** das Verbindungselement (21) mindestens ein keilförmiges Element (210) umfasst, mit welchem eine kraftschlüssige Verbindung zwischen den Sockelleistenelementen (1, 2) bereitstellbar ist.
